# EUROPEAN PATENT APPLICATION

(11) **EP 1 221 805 A2**
(43) Date of publication of application: **10.07.2002**
(21) Application number: 02250013.6
(22) Date of filing: 02.01.2002
(51) Int. Cl.: H04M 3/533, H04M 3/537

(54) **Automated reporting of number of voice messages**

(30) Priority: 09.01.2001 US 757456
(71) Applicant: AT&T Corp., New York, NY 10013-2412 (US)
(72) Inventor: Gupta, Narendra K., Dayton, NJ 08817 (US); Jagtiani, Kumar H., Manalapan, NJ 07726 (US); Stern, Benjamin J., Morris Township, NJ 07960 (US)
(74) Representative: Suckling, Andrew Michael

(57) **Abstract**

A system for automatically retrieving and reporting "message count" information to an individual that has multiple voice message mailboxes uses a database and associated speech recognition unit. The system launches phone calls to each of the user's voice mailboxes and the speech unit "listens" to the initial response message to capture the count information usually contained in the beginning of the reply. The system then collects the separate counts associated with each mailbox and sends a report of the counts to the user. The system may use telephone connections or data connections to communicate with the user.

## Description

### Technical Field

The present invention relates to a voice message system and, more particularly, to an arrangement for retrieving message count information from multiple voice message mailboxes.

### Background of the Invention

It is not an unlikely scenario for an individual to have three, four (or more) voice messaging systems. For example, home telephones may have a voice mail service that is either embedded within the telephone or associated with a local service provider. Most businesses also have a voice mailbox associated with each employee's telephone line. Cellular phones (either personal telephones, car phones, etc.) also have a voice messaging system. In order to retrieve the messages stored on or with these various mailboxes, the individual must separately access each mailbox, enter a dial-in sequence to retrieve messages, then begin accessing each separate message.

When an individual is away from any of these voice mailboxes for an extended period of time, it is often useful to "check in" and see if there are any new messages that have been stored since the last time the user had accessed that particular mailbox. This process can be particularly cumbersome when the user has multiple mailboxes to access, especially when the user is out of town and would at least like to know the number of new messages stored within each system.

### Summary of the Invention

It is proposed to provide, in accordance with the present invention, a system for the automated reporting of voice message counts associated with each voice mailbox owned/controlled by an individual. In particular, an individual accesses the automated reporting system (for example, by calling in to a special service telephone number or "clicking" on a web page "count" feature) which then "dials out" to each of the individual's voice mailboxes and retrieves the count information that is generally spoken at the beginning of each message retrieval session. A database associated with the automated reporting system maintains a listing of each user associated with the service, his set of voice mailbox telephone numbers, and the required access sequence for each mailbox. A speech recognition unit is also part of the automated reporting system and "listens" to the beginning of each retrieval session to capture the count information.

In one embodiment of the present invention, the automated reporting system configures the count information into a single, natural language response that is sent to the individual. Alternatively, the plurality of "count" responses can be concatenated and played back in sequence to the user. Both the original query for count information from the user and the return information regarding the number of stored messages can be performed via a telephone connection or a computer connection, or a combination of the two (that is, an original query by phone and a response via e-mail; or an original query by a web page click and a response via a telephone call). When the response information is presented on a web page, one or more of the voice mailbox numbers may appear as a hypertext link, allowing the user to initiate a call to a selected mailbox and retrieve the messages.

In general, the access order for each voice mailbox can be controlled by the user, in particular by the order in which the numbers are stored in the database record associated with that user. Also, the report back can be in any suitable order (i.e., "priority" of each voice messaging system, highest to lowest number of new messages, etc.).

Other and further aspects and features of the present invention will become apparent during the course of the following discussion and by reference to the accompanying drawings.

### Brief Description of the Drawings

Referring now to the drawings,
FIG. 1 illustrates an exemplary system architecture useful in deploying the automated count system of the present invention;
FIG. 2 is an exemplary database record for a user that has access to the automated voice message count reporting system of the present invention;
FIG. 3 is one example of a computer display for reporting voice mail message counts in accordance with the present invention; and
FIG. 4 contains a flowchart illustrating the automated reporting system of the present invention.

### Detailed Description

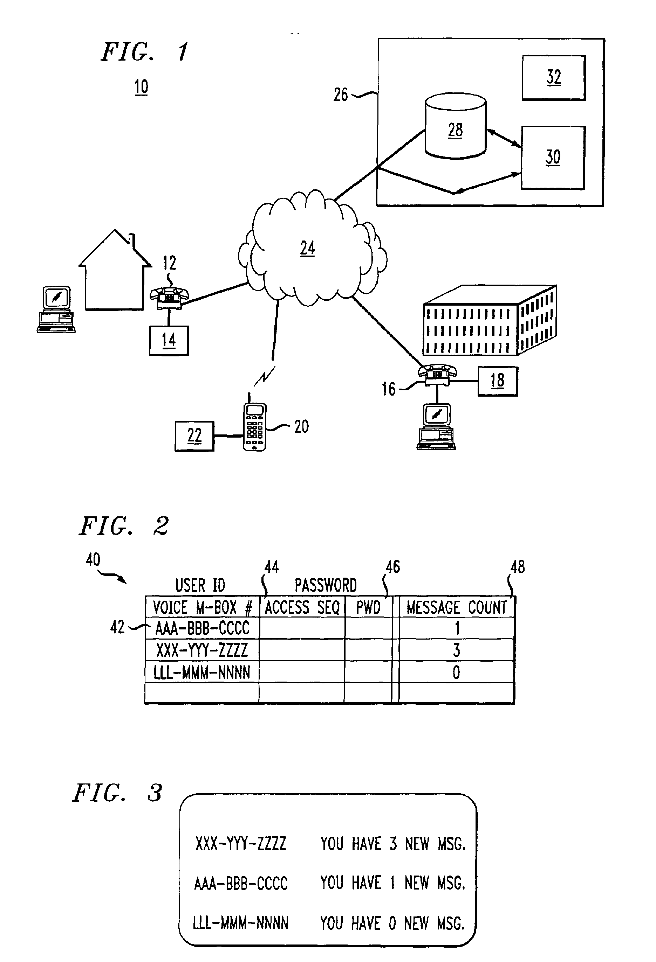

An exemplary arrangement 10 useful for deploying the automated reporting system of the present invention is illustrated in FIG. 1. In this particular setting, an individual is illustrated as having a residential telephone 12 (ANI: AAA-BBB-CCCC) with a voice mailbox 14, a work telephone 16 (ANI: XXX-YYY-ZZZZ) with a voice mailbox 18, and a cellular telephone 20 (ANI: LLL-MMM-NNNN) with a voice mailbox 22. In the simplified architecture depicted in arrangement 10, each telephone is connected to a communications network 24, which may comprise a public-switched telephone network (PSTN), a data network (such as the Internet), or any other suitable communication network. As will be discussed in detail below, one embodiment of the present invention may also utilize computers or other data devices to send/retrieve messages associated with the automated reporting system.

Referring back to FIG. 1, an automated reporting system 26 of the present invention is also shown as interacting with communications network 24. Automated reporting system 26 includes a database 28, a speech recognition unit 30, as well as an interactive program 32 that is responsive to commands from a user to both "initiate" a voice mailbox message count process and "report" the counts back to the user.

In an exemplary process of using the automated reporting system of the present invention, a user first accesses automated reporting system 26. Access to automated reporting system 26 may be through a toll-free telephone number where the user may then enters a series of DTMF tones - defined as a "user id" and "password" - to access his particular record as stored in database 28 of automated system 26. Alternatively, a special toll number may be called (where again a series of DTMF tones may be entered by the user to "point" to his associated voice mailbox numbers record). In another embodiment, a user that has access to a computer and data network may go to a web page controlled by the automated reporting system and "click" on a link to access the actual reporting system. Again, the user may need to enter personal ID and password information to be validated and permitted access his record in system 26. FIG. 2 illustrates an exemplary record 40 associated with an individual, where the user ID and password are used as pointers to record 40. Once accessed, exemplary record 40 is illustrated as storing each voice mailbox telephone number 42, the DTMF dial-in sequence 44 associated with each number 42, and any particular password(s) 46 that must be entered to retrieve voice mailbox information.

Once the user ID and password has been established and the proper record 40 has been accessed, program 32 is initiated to launch the multiple telephone calls required to retrieve the "new message" counts from each voice mailbox. In one embodiment, the calls may be launched in parallel, since program 32 will coordinate the responses prior to sending a message back to the user. Alternatively, each mailbox may be accessed in sequence (or any combination, such as accessing two mailboxes at a time). Regardless of the process, each voice mailbox owned/controlled by the user and listed in record 40 will be accessed and the initial response from the voice mailbox system will be "listened to" by automated reporting system 26. In one embodiment, speech recognition unit 30 in system 26 will be used to listen/record each message and discern the number "count" embedded in the initial response. Most voice mailbox systems begin a message retrieval system with a statement such as "you have *x* new messages", where *x* will be the count of new messages recorded since the last time the user has accessed the system. Alternatively, speech recognition unit 30 can be constructed to hold a repository of the universe of different reply messages that are used by conventional mailbox systems and then be able to discern the "count" information using the reply messages as filters. Referring to FIG. 1, speech recognition unit 30 retrieves the count information, which is stored in system 26 until all mailboxes for the user have been accessed. In one embodiment of the present invention, the count information may be stored as a separate field in the user's record, the field being associated with the particular voice mailbox telephone number.

Once all of the message counts have been retrieved, program 32 will collect this information and construct a reply message to the user. If the response is made via a telephone connection, the response may be as follows: "you have *x* new messages for telephone number AAA-BBB-CCCC; you havey new messages for telephone number XXX-YYY-ZZZZ; etc.". In the example illustrated in the drawings, there were retrieved counts of "1" new message for telephone number AAA-BBB-CCCC, "3" new messages for telephone number XXX-YYY-ZZZZ; and "0" new messages for telephone number "LLL-MMM-NNNN". If the user is engaged on a telephone call when the reply message is sent from system 26, a "whisper" technique may be used to transmit the count information to the user without disrupting the telephone call in progress. For any mailbox with "0" new messages, the default may be to not include that telephone number in the reply to the user.

As mentioned above, a user may also access the automated message count system of the present invention through a link on a Web page. For example, a telecommunications company may include a link on their home page such as "retrieve message count" that a user can "click" on to activate the inventive system. In this example, the user's current IP address will be transmitted to automated reporting system 26. The user would then be prompted to enter a userID and password to access database 28, where these entries would then be made on the keypad (instead of entering DTMF tones as is necessary when accessing through a telephone). As before, the userID and password would be verified and used to access the proper record 40 established for that user and system 26 would retrieve the various telephone numbers and access sequences from the user's record 40. Once the message count information has been captured by system 26 (using the methods described above), message system 26 may return the response to the user via either the telephone or the computing device. By telephone, system 26 would need to initiate a call to the user's identified "return message" telephone number (which may also be stored as a field 48 in record 40). Alternatively, the return message from automated reporting system 26 may be sent to the user's computer (using the IP address initially transmitted to system 26).

FIG. 3 illustrates an exemplary return message that may be transmitted to a user's computing device. In a particular implementation of the present invention, each telephone number may appear as a hypertext link, allowing the user to launch a call to a desired voice mailbox (e.g., the one with the most messages, or the business mailbox, etc.).

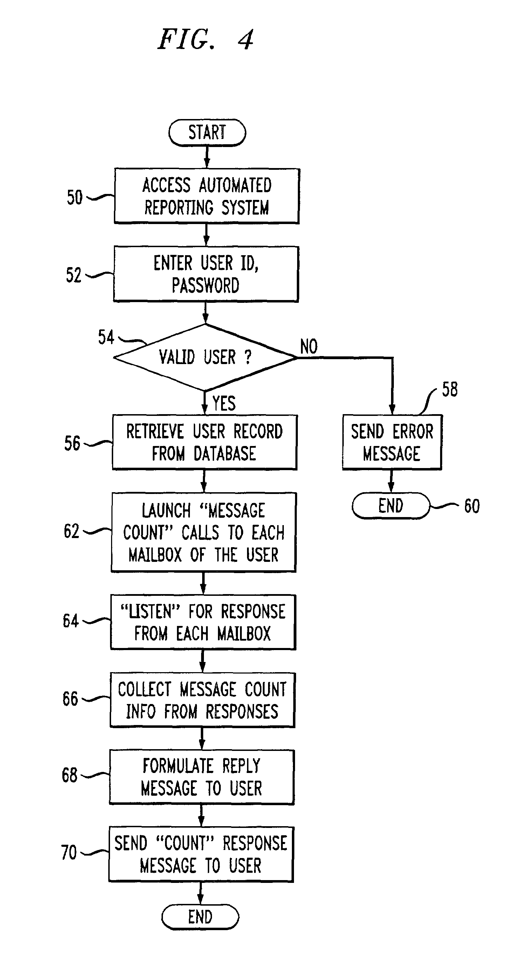

An exemplary flowchart illustrating the process of the present invention is illustrated in FIG. 4. As shown, the user first accesses the automated message count system (block 50) and, upon receiving a prompt from the system enters his user ID and password (block 52). If the user is accessing the system via a telephone, DTMF digits are used as the ID and password. Alternatively, if the user accessed system 26 through a computer-based data link, keypad entry of the ID and password may be preferred. System 26 then validates the user ID and password (block 54) and, if valid, retrieves the user record 40 from database 28 (block 56). If the user ID and password are not found, an error message is sent to the user (block 58) and the process ends (block 60).

Presuming the user ID and password are valid, system 26 retrieves the proper record 40 and collects the information regarding the telephone dial-out numbers for that user's voice mailboxes, as well as the access sequence and passwords (if any) needed to enter a particular voice mailbox. System 26 then launches calls to each voice mailbox (block 62), where these calls may be done in either a parallel or sequential arrangement (or some combination, such as launching two phone calls at time until all mailboxes have been accessed). System 26 then uses voice recognition system 30 to "listen" to the beginning of the response (defined as the "preamble") for each mailbox system (block 64), where the preamble contains, embedded perhaps within other information, a count of the number of "new messages". The responses from each reply are collected from speech recognition system 30 (block 66) and used to formulate a reply message (block 68) to the user. System 26 then sends a "count" response message to the user (block 70), where the response may be delivered via the telephone or presented on a computer screen in the form of a reply message (as shown in FIG. 3).

It is to be understood that there are many variations to the automated count system of the present invention which are intended to fall within the spirit and scope of the present invention. For example, a user may set up a program within automated count system 26 that allows the system to retrieve the count information without waiting for a prompt from the user. Particularly, the user may configure system 26 to initiate the "count" program every day at both noon and 6PM (for example), so that the user may retrieve a message count without needing to first access automated count system 26. Further, the speech recognition unit in the automated count system may be configured in different ways. For example, the recognition unit may gather the content of the prompts from each of the user's mailboxes and build a grammar that covers all of the known possibilities. Alternatively, the speech recognition unit can use natural language processing technology to extract the "count" information in a straightforward manner from the preamble of the mailbox reply. In general, the spirit and scope of the present invention is intended to be limited only by the scope of the claims appended hereto.

## Claims

1. An automated reporting system for providing voice mailbox new message count information to a user, the system **characterized by**
a database(28) of user records, each user record including a plurality of telephone numbers for dialing out to a plurality of voice mailboxes associated with the user (14,18,22), and access DTMF tones required to retrieve message information from each mailbox;
a speech recognition unit (30) for obtaining message count information from an initial reply message communicated by each accessed voice mailbox; and
an interactive program (32) responsive to telephone number entries in a user record for dialing out to and accessing each voice mailbox and collecting message count information obtained by the speech recognition unit and transmitting a report of the message count information to the user.

2. The automated reporting system as defined in claim 1 **characterized in that** access to the database is validated by a user ID and password entered by the user.

3. The automated reporting system as defined in claim 1 **characterized in that** the speech recognition unit is **characterized by** natural language speech recognition functionality.

4. The automated reporting system as defined in claim 1 **characterized in that** the speech recognition unit is **characterized by** a repository of common voice mailbox responses that is used for comparison against retrieved voice mailbox response messages.

5. The automated reporting system as defined in claim 1 **characterized in that** the interactive program unit is responsive to a telephone call from the user to initiate the reporting system.

6. The automated reporting system as defined in claim 1 **characterized in that** the interactive program unit is responsive to a data network-based request from a user to initiate a mailbox message count report.

7. The automated reporting system as defined in claim 1 **characterized in that** the interactive program unit transmits the count report to the user by telephone.

8. The automated reporting system as defined in claim 1 **characterized in that** the interactive program unit transmits the count report to the user over a data network.

9. A method of generating an automated report of the number of messages stored in a plurality of different voice mailboxes associated with a single user, the method **characterized by** the steps of:
a) generating a database (28) of voice mailbox access information for a user, said information including a telephone number to access the voice mailbox(14,18,22);
b) upon request of a user, accessing (50) each mailbox included in the database;
c) retrieving(62), from each mailbox in the plurality of mailboxes, initial reply information stating the number of new messages stored in the mailbox system;
d) collecting (66) the plurality of numbers of new messages and forming a count reply message; and
e) Transmitting (70) the count of new messages to the user.

10. The method as defined in claim 9 **characterized in that** in performing step a) a separate record is created for each user in the system, the record including the plurality of telephone numbers associated with each user's plurality of voice mailboxes.

11. The method as defined in claim 9 **characterized in that** the method is **characterized by** the further step of validating (54) the user's capability to use the reporting system.

12. The method as defined in claim 11 **characterized in that** in performing the validation a user enters (52) a user ID and password to access the reporting system.
